Europäisches Patentamt

European Patent Office

Office européen des brevets

(11) Veröffentlichungsnummer: **0 330 099**
**A1**

(12) **EUROPÄISCHE PATENTANMELDUNG**

(21) Anmeldenummer: **89102841.7**

(22) Anmeldetag: **18.02.89**

(51) Int. Cl.⁴: **A01G 9/22**

(30) Priorität: **25.02.88 DE 3805839**
**16.03.88 DE 3808686**

(43) Veröffentlichungstag der Anmeldung:
**30.08.89 Patentblatt 89/35**

(84) Benannte Vertragsstaaten:
**BE DE FR GB NL**

(71) Anmelder: **Felix Heescher Gesellschaft mit
beschränkter Haftung
Rodder Strasse 31
D-4446 Hörstel-Bevergern(DE)**

(72) Erfinder: **Heescher, Felix
Rodder Strasse 31
D-4446 Hörstel-Bevergern(DE)**

(74) Vertreter: **Habbel, Hans-Georg, Dipl.-Ing.
Postfach 3429 Am Kanonengraben 11
D-4400 Münster(DE)**

(54) **Faltbare Schattier-, Wärmedämm- und/oder Verdunklungsbahn.**

(57) Es wird vorgeschlagen, die bekannte Isolierung so zu verbessern, daß sie auch als einfache Folie ausgebildet so stabil ist, daß sie auf Drähte aufgestellt werden kann, ohne daß die Faltkanten (2,3) einknicken, d.h. die Faltkanten einer dünnen Folienbahn, eines Gewebes, eines Gewirkes oder einer Non-Wovenbahn sind stabilisiert.

EP 0 330 099 A1

## Faltbare Schattier-, Wärmedämm- und/oder Verdunklungsbahn

Die Erfindung bezieht sich auf eine Isolierung für hallenartige Gebäude gemäß dem Oberbegriff des Hauptanspruches. Weiterhin bezieht sich die Erfindung auf ein Verfahren zur Herstellung einer solchen Isolierung.

Beispielsweise aus der EP B1 28 282 ist eine Isolierung für hallenartige Gebäude bekannt, die im wesentlichen dem Oberbegriff des Hauptanspruches entspricht. Bei dieser bekannten Anordnung wird eine Noppenfolienbahn eingesetzt, die an ihren oberen Faltzonen Befestigungs- und Führungsmittel trägt, wobei diese oberen Faltzonen durch Schweißdruck oder sonstige Verfahren erzielte Flachbereiche sind, die im gefalteten Zustand der Folienbahn die Befestigungs- und Führungsmittel von außen ansetzbar tragen.

Der durch die aufgefaltete Folie beanspruchte Raum ist relativ groß und führt dadurch zwangsläufig zu Lichtverlusten innerhalb des Gewächshauses und damit zu Kulturverlusten der Pflanzen. Nach entsprechenden Untersuchungen der Fachinstitute wurde nämlich festgestellt, daß bereits 1 % Lichtverlust mit etwa 1,5 % Kulturverlust gleichzusetzen ist.

Aus dem DE-GM 75 13 576 ist ein wärmeisolierender Vorhang bekannt, der aus Rohrfolien besteht, die an diametral gegenüberliegenden, axial verlaufenden Flächenstreifen aneinander angeschweißt sind. Die Herstellung dieser aus einer Vielzahl von Rohrfolien gebildeten Isolierung ist außerordentlich aufwendig und da die gebildeten Faltkanten im Bereich der einfachen Rohrfolienwandungen liegen, wird eine nicht sehr stabile Faltung erreicht, die den Einsatz dieser bekannten Vorrichtung nur an Vertikalwänden möglich macht, wobei dann die einzelnen Rohre quer zu ihrer Längserstreckung gelocht werden mußten, um die Halte- und Zuzieheinrichtungen aufzunehmen.

Der Erfindung liegt die Aufgabe zugrunde, die gattungsbildende Isolierung so zu verbessern, daß sie auch als einfache Folie ausgebildet so stabil ist, daß sie auf Drähte aufgestellt werden kann, ohne daß die Faltkanten einknicken, so daß dadurch ein sehr dichtes Zusammenfalten des Folienpaketes möglich ist, wodurch die Lichtverluste weitgehend eingeschränkt werden.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, eine Folien-, Gewebe-, Gewirke- oder Non-Wovenbahn quer zu ihrer Längsachse mit einer Faltung auszurüsten, die die oberen und unteren Faltkanten bil det, wobei nunmehr diese oberen und unteren Faltkanten so stabilisiert werden, daß ein Einknicken der Falte quer zur Faltenlängsachse nicht mehr möglich ist. Hierdurch wird eine Folien-, Gewebe-, Gewirke- oder Non-Wovenbahn geschaffen, die auf Haltedrähten aufgestellt, feststehend ist, d.h. nicht einknickt, so daß nunmehr über die an sich bekannten Zugmittel diese Folien-, Gewebe-, Gewirke-oder Non-Wovenbahn auf- oder zugezogen werden kann. Ein Anhängen der Wärmedämm-, Schattier- und/oder Verdunklungsbahn an Aufhängedrähte ist also nicht mehr notwendig. Durch die Stabilität der Falten wird das Zusammenfalten auf engstem Raum möglich, was bisher nicht erreichbar war, so daß die unbedingt zu vermeidenden Lichtverluste ausgeschaltet werden.

Die Erfindung kann bei allen zum Stand der Technik gehörenden Wärmedämm-, Schattier- und/oder Verdunklungsbahnen eingesetzt werden, d.h. bei allen Folien-, Gewebe-, Gewirke- oder Non-Wovenbahnen. Bei Folienbahnen, die aus Kunststoff bestehen, ist das Herstellen der stabilisierten Falte beispielsweise durch Schweißen leicht möglich. Hierbei braucht die Schweißlinie nicht über die gesamte Längsachse der Falte zu verlaufen, sondern kann auch intermittierend sein, so daß nur Schweißbalken oder Schweißpunkte erzeugt werden, die aber ausreichen, die Falte in ihrem Faltzustand zu stabilisieren. Zusätzlich kann in den Faltbereich ein Verstärkungsstreifen eingesetzt sein.

Werden Gewebe-, Gewirke- oder Non-Wovenbahnen eingesetzt, können diese entweder mit einer Kunststoffbeschichtung versehen sein, wobei diese Beschich tung als Folie ausgebildet und auf die Bahn aufgebracht werden kann oder der Kunststoff kann auch aufgesprüht werden und verbindet sich dann innig mit der Gewebe-, Gewirke- oder Non-Wovenbahn. Hierbei ist das Aufbringen dieser Kunststoffsprühbalken nur in den Bereichen notwendig, in denen anschliessend die Faltungen erfolgen sollen.

Bei Gewebe-, Gewirke- oder Non-Wovenbahnen ist es auch möglich, quer zur Bahnlängsrichtung, also in Schußrichtung, aus Kunststoff bestehende. Fäden einzuziehen, die dann im Bereich der Faltung so mit Wärme behandelt werden, daß sie eine stabilisierte Faltkante schaffen.

In gleicher Weise ist es auch möglich, in Schußrichtung in Gewebe-, Gewirke- oder Non-Wovenbahnen beispielsweise Metallfäden einzubringen, die so formstabil sind, daß sie nach ihrer Knickung im Faltkantenbereich ihre Form beibehalten und damit für die Stabilität der Falte sorgen.

Werden zur Verdunkelung dunkel gefärbte Folienbahnen eingesetzt, wird gemäß der Erfindung vorgesehen, daß die Faltenspitzen intermittierend Öffnungen aufweisen, die der Belüftung und Entwässerung dienen. Damit durch diese Öffnungen kein Licht eindringen kann, wird vorgeschlagen, in den Faltbereich unterhalb der Öffnungen einen Verdunkelungsstreifen, beispielsweise aus textilem Werkstoff, eine Schnur od. dgl. einzusetzen und diesen Verdunkelungsstreifen dann über Schweißraupen oder Schweißpunkte festzulegen. Hierbei sind die Schweißbereiche intermittierend wie die Öffnungen vorgesehen, so daß das Wasser hier austreten kann.

Werden flächige Kunststoffolienbahnen eingesetzt, wird vorzugsweise so vorgegangen, daß im Herstellungsverfahren der Folienbahn anschließend an das Ziehen der Folie in einem Kalanderbereich Metallbändchen aufkaschiert werden, die in Längsachse der Gewebebahn verlaufen, daß dann anschließend eine Perforierung der Folienbahn erfolgt, worauf dann diese so vorbereitete Folienbahn über entsprechende, die Faltung bewirkende Formelemente geführt wird, worauf anschließend in den gebildeten Faltkanten, d.h. der oberen und der unteren Faltkante, die Wärme- oder Druckbearbeitung vorgenommen wird, durch die die Faltkante stabilisiert wird.

Zusammenfassend ist festzustellen, daß durch die oben aufgezeigten Möglichkeiten mit geringem Konfektionsaufwand ein faltbares System geschaffen wird, das auf kleinstem Raum zusammengefaltet werden kann und das aufgrund der Stabilität der Falte sich stets in korrekte Zick-Zackfalten beim Zusammenschieben legt.

Die Erfindung ist besonders vorteilhaft für die in den letzten Jahren in großem Umfang eingesetzten weichen elastischen Materialien, da hierdurch die Faltung vorbestimmt korrekt erfolgt, aber auch für die stärkeren, schwereren und festeren Wärmedämmmaterialien, die durch die Faltung ebenfalls auf kleinstem Raum zusammengefaltet werden können.

Mit besonderem Vorteil läßt sich die Erfindung bei Systemen entsprechend der DE-PS 35 40 758 einsetzen, wo nicht nur ein Sonnenschutzschirm, sondern zwei voneinander getrennt arbeitende Anlagen installiert werden, wo somit also rechts und links am Binder zu sammengeschobene Isolierungsbahnen untergebracht werden müssen.

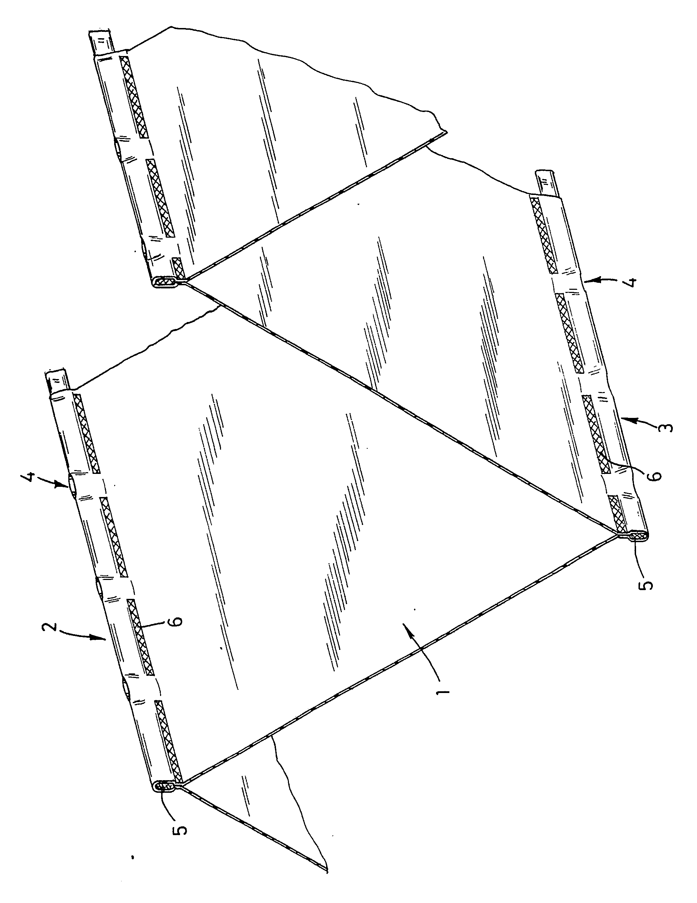

Ein Ausführungsbeispiel wird nachfolgend anhand der Zeichnung erläutert.

In der Zeichnung ist eine der Verdunkelung dienende Folienbahn 1 dargestellt, die mit oberen Faltbereichen 2 und unteren Faltbereichen 3 versehen ist.

In den Faltbereichen 2 und 3, d.h. also in den Faltenspitzen, sind Öffnungen 4 vorgesehen, die im Prinzip den Verdunkelungseffekt wieder teilweise aufheben würden. Diese Öffnungen sind aber für die Be- und Entlüftung und für Entwässerungszwecke erforderlich. Um den Verdunkelungseffekt vollständig beibehalten zu können, sind in den Faltbereichen Verdunkelungsstreifen 5 eingesetzt, die die Öffnungen abdecken und die durch Schweißbereiche 6 in den Faltspitzen gesichert werden. Bestehen diese Verdunkelungsstreifen aus beispielsweise einer Kunststoffschnur erfolgt kein Aufsaugen der Flüssigkeit und dadurch, daß nur intermittierende Schweißbereiche 6 vorgesehen sind, ist ein einwandfreier Durchtritt der Luft und des Wassers möglich.

## Ansprüche

1. Isolierung von hallenartigen Gebäuden, insbesondere Gewächshäusern im Bereich des Daches mittels wenigstens einer, quer zu ihrer Bewegungsrichtung auf Haltevorrichtungen verschieblich getragenen und zickzackförmig faltbaren Wärmedämm-, Schattier- und/oder Verdunklungsbahn, die mittels Zugmittel hinund herbewegbar angeordnet ist und wenigstens in ihren oberen und unteren Faltzonen Belüftungs- und/oder Entwässerungsöffnungen aufweist, dadurch gekennzeichnet, daß die Wärmedämm-, Schattier- und/oder Verdunklungsbahn aus einer dünnen Folienbahn, einem Gewebe, einem Gewirke oder einer Non-Wovenbahn besteht und die oberen und unteren, in Längsrichtung der Bahn (Kettrichtung) verlaufenden Faltkanten der Bahn eine gegen Einknicken stabilisierte Falte aufweisen.

2. Isolierung nach Anspruch 1, dadurch gekennzeichnet, daß bei Einsatz eines Gewebes, eines Gewirkes oder einer Non-Wovenbahn die Bahn eine die Faltenstabilisierung ermöglichende Beschichtung aufweist.

3. Isolierung nach Anspruch 1, dadurch gekennzeichnet, daß bei Einsatz eines Gewebes, eines Gewirkes oder einer Non-Wovenbahn in Schußrichtung der Bahn Fäden oder Streifen aus wärmeverformbarem Kunststoff eingezogen sind.

4. Isolierung nach Anspruch 1, dadurch gekennzeichnet, daß bei Einsatz eines Gewebes, eines Gewirkes oder einer Non-Wovenbahn in Schußrichtung der Bahn Fäden oder Streifen aus bleibend verformbarem Werkstoff, wie Metall, eingezogen sind.

5. Isolierung nach einem oder mehreren der vorhergehenden Ansprüche 1 bis 4, dadurch gekennzeichnet, daß die Stabilisierungsbereiche in den Faltkanten nur intermittierend über die Länge der Faltkanten verläuft.

6. Isolierung nach Anspruch 1 und 5, dadurch gekennzeichnet, daß bei Einsatz einer Folienbahn oder einer Non-Wovenbahn in Schußrichtung der Bahn im Faltbereich Verstärkungsstreifen eingesetzt und die Folienbahn oder Non-Wovenbahn im
Faltbereich verschweißt ist.

7. Isolierung wenigstens nach Anspruch 1, dadurch gekennzeichnet, daß bei Einsatz einer der
Verdunkelung dienenden Folienbahn in den oberen
und unteren Faltbereichen Entwässerungs- und
Entlüftungsöffnungen eingesetzt sind, die Entlüftungsöffnungen durch einen Verdunkelungsstreifen
im Falteninneren abgedeckt sind und der Verdunkelungsstreifen im Faltbereich durch Schweißpunkte oder Schweißraupen festgelegt ist.

8. Verfahren zur Herstellung einer Isolierung für
hallenartige Gebäude, insbesondere Gewächshäuser, aus zickzackförmig faltbaren Wärmedämm-,
Schattier- und/oder Verdunklungsbahnen, dadurch
gekennzeichnet, daß die Folien-, Gewebe-,
Gewirke- oder Non-Wovenbahn in Bahnlängsrichtung in Vorschubrichtung gesehen über die Faltung
bewirkende Formkörper geführt und dann die so
gebildeten Falten entweder durch Wärme und/oder
durch Druck derart stabilisiert werden, daß ein ebenes Zurückfalten nicht mehr möglich oder ein Einknicken der Falten ausgeschlossen ist.

9. Verfahren nach Anspruch 8 unter Verwendung einer Folienbahn, dadurch gekennzeichnet,
daß die Folienbahn in einer ersten Bearbeitungsstation mit auf ihrer Ober- und/oder Unterseite aufkaschierten Metallstreifen versehen wird, die in
Längsrichtung der Folienbahn verlaufen, in einer
nachfolgenden Bearbeitungsstation ein Perforieren
der gesamten Folienbahn erfolgt und anschließend
die Folienbahn über die oberen und unteren Faltenkanten bildende Formkörper geführt und anschließend durch Wärmeeinwirkung die so gebildeten Faltkanten stabilisiert werden.

Europäisches
Patentamt

**EUROPÄISCHER RECHERCHENBERICHT**

Nummer der Anmeldung

EP    89 10 2841

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | EP-A-028282 (HEESCHER) <br> * Seite 6, Zeile 1 - Zeile 26; Figur 1 * <br> --- | 1, 4 | A01G9/22 |
| Y | CH-A-204800 (FLOHR) <br> * Seite 1, linke Spalte, Absatz 1 * <br> * Seite 3, linke Spalte, letzter Absatz - Seite 4, rechte Spalte, Absatz 1; Figuren 1-6 * <br> --- | 1 | |
| Y | FR-A-861103 (PERSSON) <br> * Seite 1, Zeile 43 - Seite 2, Zeile 12; Figuren 1, 2 * <br> --- | .4 | |
| A | FR-A-2282027 (AGRINOVA) <br> * Seite 2, Zeile 40 - Seite 4, Zeile 4; Figuren 1, 2 * <br> --- | 1 | |
| A | US-A-2874612 (LUBOSHEZ) <br> * Spalte 4, Zeile 72 - Spalte 5, Zeile 42; Figuren 1-2 * <br> ----- | 1, 2 | |

RECHERCHIERTE
SACHGEBIETE (Int. Cl.4)

A01G
E06B

Der vorliegende Recherchenbericht wurde für alle Patentansprüche erstellt

| Recherchenort | Abschlußdatum der Recherche | Prüfer |
|---|---|---|
| DEN HAAG | 29 MAI 1989 | HERYGERS J.J. |